(19) Europäisches Patentamt
European Patent Office
Office européen des brevets

(11) Veröffentlichungsnummer: **0 206 210**
**A2**

# (12) EUROPÄISCHE PATENTANMELDUNG

(21) Anmeldenummer: **86108209.7**

(22) Anmeldetag: **16.06.86**

(51) Int. Cl.[4]: **C 08 K 5/16**, C 08 L 27/06

(30) Priorität: **24.06.85 DE 3522554**

(43) Veröffentlichungstag der Anmeldung: **30.12.86 Patentblatt 86/52**

(84) Benannte Vertragsstaaten: **AT BE CH DE FR GB IT LI NL SE**

(71) Anmelder: **Henkel Kommanditgesellschaft auf Aktien, Postfach 1100 Henkelstrasse 67, D-4000 Düsseldorf-Holthausen (DE)**

(72) Erfinder: **Hase, Christian, Dr., Millrather Weg 29, D-4006 Erkrath (DE)**
Erfinder: **Wegemund, Bernd, Dr., Händelweg 3, D-5657 Haan 1 (DE)**
Erfinder: **Erwied, Werner, Dr., Bruchhauserweg 31, D-4010 Hilden (DE)**
Erfinder: **Krampitz, Dieter, Zeppelinstrasse 29, D-4050 Mönchengladbach (DE)**

## (54) Stabilisierte Polyvinylchlorid-Formmassen.

(57) Zur Stabilisierung von Polyvinylchlorid-Formmassen werden Verbindungen der Formel (I),

$$(R-\overset{\overset{O}{\|}}{C}-\overset{\ominus}{N}-CN)_n \quad M^{n\oplus} \qquad (I)$$

in der R einen geradkettigen oder verzweigten Alkyl- oder Alkenylrest mit 5 bis 21, vorzugsweise 11 bis 17, Kohlenstoffatomen bedeutet, der gegebenenfalls mit OH-, $O-CH_2-CH_2-OH$- und/oder $O-R'$-Gruppen substituiert sein kann, wobei R′ einen Alkylrest mit 1 bis 4 Kohlenstoffatomen darstellt, während M für ein ein- oder zweiwertiges Metallkation steht und n die Wertigkeit des Metallkations bedeutet, eingesetzt.

EP 0 206 210 A2

Patentanmeldung
4000 Düsseldorf, den 19. Juni 1985
Henkelstraße 67

Henkel KGaA
ZR-FE/Patente

Dr. Gla/Pr

Patentanmeldung

D 6686 EP

"Stabilisierte Polyvinylchlorid-Formmassen"

Die Erfindung betrifft stabilisierte thermoplastische Formmassen auf Basis von Polyvinylchlorid oder im wesentlichen Vinylchlorid enthaltenden Polymerisaten.

Bei der formgebenden Verarbeitung von thermoplastischen Polymerisaten zu Rohren, Flaschen, Profilen, Folien und dergleichen, beispielsweise durch Extrudieren, Spritzgießen, Blasen, Tiefziehen und Kalandrieren, kann bei den dabei auftretenden hohen Temperaturen leicht ein Abbau des Kunststoffs eintreten. Dies führt zu unerwünschten Verfärbungen und zu einer Minderung der mechanischen Eigenschaften. Aus diesem Grund setzt man den Polymerisaten vor der Warmverformung Stabilisatoren zu, die einem solchen Abbau entgegenwirken. Für Polyvinylchlorid und im wesentlichen Vinylchlorid enthaltende Mischpolymerisate setzt man als Wärmestabilisatoren vor allem anorganische und organische Bleisalze, organische Antimonverbindungen, Organozinnverbindungen sowie Cadmium-/Bariumcarboxylate und -phenolate ein. Die genannten Metallverbindungen werden gewöhnlich als Primärstabilisatoren bezeichnet; zur Verbesserung ihrer Wirksamkeit setzt man ihnen häufig Sekundär- oder Co-Stabilisatoren zu. Weitere Einzelheiten über die für Vinylchloridpolymerisate gebräuchlichen Wärmestabilisatoren können der einschlägigen

...

Literatur entnommen werden, beispielsweise der Encyclopedia of Polymer Science and Technology, Band 12, New York, London, Sydney, Toronto 1970, Seiten 737 bis 768.

Die genannten Stabilisatoren zeigen in der Praxis normalerweise eine durchaus befriedigende Wirkung. Bei bestimmten Polyvinylchlorid-Mischungen können jedoch unerwünschte Produkteigenschaften auftreten, insbesondere unbefriedigende Anfangs- und/oder Langzeitstabilitätswerte, die sich durch Modifizierung der Stabilisatoren oder Stabilisatorgemische oder durch Anheben der Zusatzmengen nicht beheben lassen. Darüber hinaus bestehen auf bestimmten Einsatzgebieten gegen Blei-, Antimon- und Cadmiumverbindungen Bedenken toxikologischer Art. Eine Reihe von Organozinnverbindungen ist toxikologisch unbedenklich; ihrem breiten Einsatz steht jedoch ihr hoher Preis entgegen. Aus diesem Grund versucht man schon seit langem, diese Verbindungen durch weniger bedenkliche und preisgünstige Substanzen zu ersetzen. In diesem Zusammenhang ist man dazu übergegangen, als Primärstabilisatoren fettsaure Salze, aromatische Carboxylate und Phenolate der Metalle Calcium, Barium, Zink und Aluminium zu verwenden, die gegebenenfalls durch Co-Stabilisatoren wie zum Beispiel organische Phosphite, Iminoverbindungen, Epoxyverbindungen, mehrwertige Alkohole oder 1,3-Diketone ergänzt werden. Diese neueren Stabilisatorsysteme sind jedoch mit dem Nachteil behaftet, daß sie den zu stabilisierenden Formmassen eine zu geringe Anfangsstabilität und/oder eine zu geringe Langzeitstabilität verleihen. Insbesondere beobachtet man bei solchen Stabilisatorkombinationen neuerer Art, die zur Verbesserung der Anfangsstabilität Zinkseifen enthalten, bei Überdosierung der Zinkseifen ein unerwünschtes vorzeitiges Ende der Langzeitstabilität, das sich in einem plötzlichen Schwarzwerden der Polyvinylchlorid-Formmassen (zinc burning) bemerkbar macht. Es besteht daher ein Bedürfnis nach Substanzen, mit deren Hilfe sich die Anfangs- und/oder die Langzeitwirkung von

...

Stabilisatorsystemen für Formmassen auf Basis von Polyvinylchlorid entscheidend verbessern lassen.

Es wurde gefunden, daß sich von Fettsäuren mit 6 bis 22 Kohlenstoffatomen abgeleitete Acylcyanamide ein- oder zweiwertiger Metalle mit Erfolg zur Stabilisierung von Polyvinylchlorid-Formmassen verwenden lassen. Dabei können diese Acylcyanamide auch zur Modifizierung sowohl von Stabilisatorsystemen auf Basis von Blei-, Antimon-, Cadmium-/Barium- und Organozinnverbindungen als auch von Stabilisatorsystemen auf Basis von Calcium, Barium, Zink und Aluminium eingesetzt werden. Es wurde insbesondere festgestellt, daß sich die Acylcyanamide von toxikologisch unbedenklichen ein- oder zweiwertigen Metallkationen besonders gut für die Gestaltung von Stabilisatorsystemen der neueren Art eignen. Vor allem kann hier das unerwünschte zinc burning vermieden und die Anfangsstabilität weiter verbessert werden, wenn man anstelle der bisher gebräuchlichen Zinkseifen entsprechende Acylcyanamide einsetzt.

Gegenstand der Erfindung sind demnach stabilisierte Polyvinylchlorid-Formmassen, die mindestens eine Verbindung der Formel (I) enthalten,

$$(R - \overset{\overset{O}{\|}}{C} - \overset{\ominus}{N} - CN)_n \qquad M^{n\oplus} \qquad (I)$$

in der R einen geradkettigen oder verzweigten Alkyl- oder Alkenylrest mit 5 bis 21, vorzugsweise 11 bis 17 Kohlenstoffatomen bedeutet, der gegebenenfalls mit OH-, $O-CH_2-CH_2-OH$- und/oder $O-R'$-Gruppen substituiert sein kann, wobei $R'$ einen Alkylrest mit 1 bis 4 Kohlenstoffatomen darstellt, während M für ein ein- oder zweiwertiges Metallkation steht und n die Wertigkeit des Metallkations bedeutet.

Die erfindungsgemäßen Polyvinylchlorid-Formmassen enthalten vorzugsweise Acylcyanamide der Formel (I), in der das Metallkation eine Lithium-, Natrium-, Kalium-, Magnesium-, Calcium-, Strontium-, Barium-, Mangan-, Eisen-, Kobalt-, Nickel-, Zink-, Cadmium-, Kupfer- und/oder Bleikation ist.

Bei den Acylcyanamiden der Formel (I) handelt es sich zum Teil um bekannte Verbindungen. Die unter die oben gegebene Definition fallenden neuen Verbindungen werden hier nicht als solche beansprucht; sie sind vielmehr Gegenstand eines selbständigen Patentgesuchs der Anmelderin vom gleichen Tag.

Die Acylcyanamide der Formel (I) können nach an sich bekannten Methoden hergestellt werden. Die entsprechenden Alkalimetallacylcyanamide können beispielsweise durch Reaktion von Cyanamid mit Carbonsäurechloriden und nachfolgende Neutralisation mit Alkalimetallhydroxyden, -carbonaten und -bicarbonaten erhalten werden (siehe J. prakt. Chemie, N. F., Bd. 11 (1875) S. 343-347, Bd. 17 (1878) S. 9 - 13). Für die technische Herstellung der Alkalimetallacylcyanamide eignet sich insbesondere die Umsetzung von Cyanamid mit Alkalimetallmethylat und Fettsäuremethylester in stöchiometrischen Mengen in Methanol als Lösungsmittel. Hier ist für eine vollständige Umsetzung eine Reaktionszeit von 1 bis 5 Stunden bei Rückflußtemperatur ausreichend. Da die Umsetzung quantitativ verläuft, genügt zur Aufarbeitung die Entfernung des Methanols.

Die Herstellung der Acylcyanamide zweiwertiger Metalle erfolgt zweckmäßigerweise durch doppelte Umsetzung von Alkalimetallacylcyanamiden mit wasserlöslichen Salzen entsprechender Metalle in wäßriger Lösung. Für diese Umsetzung eignen sich die Chloride, Sulfate und Acetate der genannten Metalle, soweit sie in Wasser gut löslich sind. Die Acylcyanamide der zweiwertigen Metalle sind - mit Ausnahme der Magnesiumsalze - in Wasser schwer löslich. Dementsprechend fallen sie bei der Herstellung

...

als Niederschläge an, die abfiltiert und getrocknet werden. Die Magnesiumsalze fallen beim Stehenlassen der gegebenenfalls eingeengten Reaktionslösungen aus und können durch Filtration abgetrennt werden.

Die Acylreste R-CO- der Verbindungen der Formel (I) leiten sich von geradkettigen oder verzweigten, gesättigten oder ungesättigten Fettsäuren mit 6 bis 22 Kohlenstoffatomen ab, beispielsweise von den aus Fetten und Ölen pflanzlichen oder tierischen Ursprungs stammenden Fettsäuren wie Capron-, Capryl-, Caprin-, Laurin-, Myristin-, Palmitin-, Stearin-, Arachidin-, Behen-, Palmitöl-, Öl-, Eruka-, Linol- und Linolensäure. Dabei können die Acylreste von einzelnen Fettsäuren oder von Gemischen solcher Fettsäuren abgeleitet sein, im letzteren Fall insbesondere von Fettsäuregemischen, wie sie bei der Fettspaltung von natürlichen Fetten und Ölen anfallen. Daneben können die Acylreste der Acylcyanamide auch von verzweigten synthetischen Fettsäuren der genannten Kohlenstoffzahl abgeleitet sein. Die Acylreste können auch von Fettsäuren herstammen, die mit OH-Gruppen substituiert sind, beispielsweise von Ricinolsäure und gehärteter Ricinolsäure. Ferner können die Acylreste auch aus Fettsäuren stammen, die mit $O-CH_2-CH_2-OH$-Gruppen und $R'-O$-Gruppen substituiert sind, wobei $R'$ einen Alkylrest mit 1 bis 4 Kohlenstoffatomen bedeutet. Solche Fettsäuren sind über Epoxyfettsäuren, beispielsweise Epoxystearinsäure, durch Öffnung des Oxiranrings mit Ethylenglykol oder Alkoholen mit 1 bis 4 Kohlenstoffatomen zugänglich. In einer bevorzugten Ausführungsform der Erfindung sind die Acylreste der Acylcyanamide der Formel (I) von geradkettigen, insbesondere von unsubstituierten Fettsäuren mit 12 bis 18 Kohlenstoffatomen abgeleitet.

In den erfindungsgemäßen stabilisierten Polyvinylchlorid-Formmassen sind die Acylcyanamide der Formel (I) in Mengen von 0,1

...

bis 10, vorzugsweise 0,2 bis 5 Gewichtsteilen auf 100 Gewichtsteile Polymerisat vorhanden.

Die Acylcyanamide zeigen in den erfindungsgemäßen Polyvinylchlorid-Formmassen eine überdurchschnittliche Wärmestabilisierungswirkung, die durch geeignete Auswahl der Metallkationen sowohl auf die Anfangsstabilität als auch auf die Langzeitstabilität hin ausgerichtet werden kann. So kann beispielsweise die Langzeitstabilität von PVC-Formmassen durch Calciumacylcyanamide entscheidend verbessert werden. Zusätze von Zinkacylcyanamiden wirken sich vor allem positiv auf die Anfangsstabilität der PVC-Formmassen aus, wobei auch mit hohen Dosierungen kein unerwünschtes zinc burning festzustellen ist. Darüber hinaus ist zu beobachten, daß PVC-Formmassen, die Acylcyanamide anstelle von herkömmlichen Stabilisatoren wie zum Beispiel Metallseifen enthalten, eine verbesserte Transparenz aufweisen.

Die Acylcyanamide der Formel (I) können in den erfindungsgemäßen Polyvinylchlorid-Formmassen als alleinige Primärstabilisatoren vorhanden sein; sie können aber auch im Gemisch mit anderen, bekannten Primärstabilisatoren wie anorganischen und organischen Bleisalzen, organischen Antimonverbindungen, Organozinnverbindungen, Cadmium-/Bariumcarboxylaten und -phenolaten, fettsauren Salzen, aromatischen Carboxylaten und Phenolaten von Calcium, Barium, Zink und Aluminium vorliegen.

Die erfindungsgemäßen stabilisierten Polyvinylchlorid-Formmassen können neben den genannten Primärstabilisatoren bekannte Co-Stabilisatoren, Gleitmittel, Weichmacher, Antioxidantien, Zusätze zur Verbesserung der Schlagzähigkeit, Füllstoffe und andere Hilfsmittel enthalten.

Die Basis der erfindungsgemäßen stabilisierten thermoplastischen Formmassen besteht aus Homopolymerisaten oder

...

Mischpolymerisaten des Vinylchlorids. Die Mischpolymerisate enthalten wenigstens 50 Molprozent, vorzugsweise wenigstens 80 Molprozent Vinylchlorid. Die Polymerisate können auf beliebigem Wege, beispielsweise durch Suspensions-, Emulsions- oder Blockpolymerisation hergestellt worden sein. Ihr K-Wert kann zwischen etwa 35 und 80 liegen. In den Rahmen der Erfindung fallen auch Formmassen auf der Grundlage von nachchloriertem Polyvinylchlorid sowie solche auf Basis von Harzgemischen, die überwiegend Homopolymerisate oder Copolymerisate des Vinylchlorids enthalten. Der Begriff Polyvinylchlorid-Formmassen umfaßt erfindungsgemäß sowohl die zur Verformung bestimmten Halbfertigprodukte als auch die aus diesen Massen beliebig geformten Artikel.

Die in den nachfolgenden Beispielen enthaltenen Prozentangaben sind, sofern nicht anders angegeben, in Gewichtsprozent.

## Beispiele

### I. Herstellung der Acylcyanamide der Formel I

### Beispiel 1

In einem Reaktionsgefäß mit Rührer, Tropftrichter, Thermometer, Gaseinleitungsrohr und Rückflußkühler wurden bei Raumtemperatur unter Rühren und Einleiten von Stickstoff 414,5 g einer 28,4 %igen Lösung von Natriummethylat (118 g = 2,18 Mol) in Methanol mit 91,6 g (2,18 Mol) Cyanamid versetzt. Anschließend wurden 650,7 g (2,18 Mol) Methylstearat zugegeben, das Gemisch 3 Stunden lang zum Rückflußkochen erhitzt und schließlich auf Raumtemperatur abgekühlt.

In der frisch hergestellten Suspension wurde das Stearoylcyanamid-Natriumsalz nach Zusatz von 1,5 l Wasser bei 80 °C in Lösung gebracht. Bei gleichbleibender Temperatur wurde im Verlauf einer Stunde unter Rühren eine Lösung von 161 g (1,09 Mol) $CaCl_2.2H_2O$ in 250 ml Wasser zugetropft, wobei sich schnell ein weißer Niederschlag bildete. Anschließend wurde eine Stunde lang bei 80 °C weitergerührt. Das feste Produkt wurde aus der gekühlten Mischung durch Filtration abgetrennt, mit Wasser gewaschen, bis es frei von Chlorid war, bei 60 °C im Vakuum getrocknet und zu einem weißen Pulver zerkleinert. Die Ausbeute betrug 666,5 g (93,4 % d. Th.)

Analyse

...

$C_{38} H_{70} N_4 O_2 Ca$ (MM 655.092)

ber. (%) 69,7 C; 10,8 H; 8,5 N; 4,9 O; 6,1 Ca.
gef. (%) 66,7 C 10,8 H; 6,4 N; 4,9 O; 5,8 Ca.

IR-Sektrum (in KBr; $cm^{-1}$)

1575, 2190.

Beispiel 2

Zu einer Lösung von 246,3 g (1,0 Mol) Lauroylcyanamid-Natriumsalz in 2,4 l Wasser wurde bei 75°C unter Rühren eine Lösung von 110,3 g (0,5 Mol) Zinkacetatdihydrat in 600 ml Wasser getropft, wobei sich ein weißer Niederschlag bildete. Nach Beendigung des Zutropfens wurde das Gemisch eine Stunde lang bei 75 °C weitergerührt. Das feste Produkt wurde durch Filtration abgetrennt, mit Wasser gewaschen bis es frei von Acetat war und bis zur Gewichtskonstanz im Vakuum getrocknet. Die Ausbeute betrug 254 g (99,3 % d. Th.).

Analyse

$C_{26} H_{50} N_4 O_2 Zn$ (MM 516,38)

ber. (%): 60,5 C; 9,8 H; 10,9 N; 6,2 O; 12,7 Zn.
gef. (%): 60,4 C; 9,2 H; 10,4 N; 5,9 O; 13,6 Zn.

IR-Spektrum (KBr; $cm^{-1}$)
1693, 2225.

Beispiele 3 - 15

In analoger Weise wie in den Beispielen 1 und 2 wurden durch doppelte Umsetzung von Acylcyanamid-Natiumsalzen mit

. . .

entsprechenden Metallsalzen von Fettsäuren abgeleitete Acylcyanamidsalze mit folgender zweiwertigen Kationen hergestellt: Magnesium, Barium, Blei, Kobalt, Kupfer und Mangan. Nach der Analyse besaßen alle hergestellten Salze die Zusammensetzung $(Acyl-CN_2)_2$ M und waren - mit Ausnahme der Magnesiumsalze - in Wasser nahezu unlöslich. Die Salze des Kobalts, des Kupfers und des Mangans waren im trockenen Zustand blau, blaßgrün bzw. hellbraun gefärbt. In der folgenden Tabelle I sind die Daten einiger Ansätze zur Herstellung der oben genannten Salze wiedergegeben.

# T A B E L L E I

## Herstellung von Acylcyanamidsalzen zweiwertiger Kationen

| Beispiel | Ausgangsmaterialien: Na-Acylcyanamid Acyl | Na-Acylcyanamid Menge (Mol) | Metallsalz Art | Metallsalz Menge (Mol) | Lösungsmittel $H_2O$ (l) | Endprodukte: Ausbeute % d.Th. | IR-Banden ($CM^{-1}$) |
|---|---|---|---|---|---|---|---|
| 3 | $C_{12}$ | 1,0 | $Mg(OAc)_2 \cdot 4H_2O$ | 0,5 | 1,8 | 41 | 1570;2180 |
| 4 | $C_{18}$ | 0,8 | $BaCl_2 \cdot 2H_2O$ | 0,4 | 3,0 | 93 | 1540;2160 |
| 5 | $C_{12}$ | 1,0 | $Pb(OAc)_2 \cdot 3H_2O$ | 0,5 | 2,0 | 95 | 1690;2150 |
| 6 | $C_{18}$ | 0,8 | $Pb(OAc)_2 \cdot 3H_2O$ | 0,4 | 4,0 | 94 | 1635;2180 |
| 7 | $C_{18}$ | 0,8 | $Zn(OAc)_2 \cdot 2H_2O$ | 0,4 | 4,2 | 94 | 1695;2220 |
| 8 | $C_{12}$ | 1,0 | $Co(OAc)_2 \cdot 4H_2O$ | 0,5 | 2,4 | 95 | 1685;2205 |
| 9 | $C_{18}$ | 0,8 | $Co(OAc)_2 \cdot 4H_2O$ | 0,4 | 5,5 | 97 | 1610;2205 |
| 10 | $C_{12}$ | 1,0 | $Cu(OAc)_2 \cdot H_2O$ | 0,5 | 2,6 | 95 | 1690;2190 |
| 11 | $C_{18}$ | 0,8 | $Cu(OAc)_2 \cdot H_2O$ | 0,4 | 6,7 | 99 | 1690;2190 |
| 12 | $C_{12}$ | 1,0 | $MnSO_4 \cdot H_2O$ | 0,5 | 2,0 | 95 | 1570;2210 |
| 13 | $C_{18}$ | 0,8 | $MnSO_4 \cdot H_2O$ | 0,4 | 3,5 | 98 | 1580;2180 |
| 14 | $C_{16}$ | 2,3 | $CaCl_2 \cdot 2H_2O$ | 1,2 | 1,8 | 87 | 1585;2185 |
| 15 | $C_{18}$(R)* | 0,57 | $Zn(OAc)_2 \cdot 2H_2O$ | 0,285 | 1,25 | 95 | 1695;2220 |

*)Acylrest abgeleitet von gehärteter Ricinolsäure

Verwendung der Acylcyanamide der Formel I zur Stabilisierung von Polyvinylchlorid-Formmassen

Herstellung und Prüfung der Walzfelle

In den Beispielen 16 bis 26 wurde die Wirkung der Stabilisatorkombinationen anhand der "statischen Thermostabilität" von Walzfellen geprüft. Zu diesem Zweck wurden Stabilisatorgemische enthaltende Polyvinylchlorid-Formmassen auf einem Laborwalzwerk der Abmessung 450 x 220 mm (Fa. Berstorf) bei einer Walzentemperatur von 170 °C und einer Walzendrehzahl von 300 Upm im Gleichlauf im Verlauf von 5 Minuten zu Prüffellen verarbeitet. Die ca. 0,5 mm dicken Felle wurden zu quadratischen Probestücken mit 10 mm Kantenlänge zerschnitten, die anschließend in einem Trockenschrank mit 6 rotierenden Horden (Heraeus FT 420 R) einer Temperatur von 180 °C ausgesetzt wurden. Im Abstand von 10 Minuten wurden Proben entnommen und deren Farbveränderung begutachtet.

Beispiel 16

Eine Stabilisator-/Verarbeitungshilfsmittelkombination der Zusammensetzung (GT = Gewichtsteil)

100 GT Calciumstearat
20 GT Stearinsäure
20 GT Paraffin, Smp. 71 °C
50 GT Pentaerythritester der Stearinsäure (Molverhältnis 1 : 1,5; OH-Zahl 212)

wurde durch mechanisches Vermischen der Komponente hergestellt.

Die Stabilisatorkombinationen A, B, C und D wurden durch Zumischen von 5, 10 und 20 GT Zinklauroylcyanamid bzw.

...

20 GT Zinkstearoylcyanamid auf 190 GT der oben angegebenen Zusammensetzung erhalten.

Für Vergleichsversuche wurden die Stabilisatorkombinationen E, F und G durch Zumischen von 5, 10 und 20 GT Zinkstearat auf 190 GT der oben angegebenen Grundrezeptur erhalten.

Durch mechanisches Vermischen von jeweils 100 GT Suspensions-PVC (K-Wert 70; Vestolit(R) S 7054, Hersteller: Chemische Werke Hüls, Marl) mit 2,4 - 3,9 GT der Stabilisatorkombination A bis G wurden die Polyvinylchlorid-Formmassen A' bis G' erhalten, deren Zusammensetzungen der Tabelle II zu entnehmen sind.

Die stabilisierten Polyvinylchlorid-Formmassen wurden nach der oben angegebenen Methode geprüft. In der Tabelle II ist jeweils die Zeit angegeben, nach der die erste Verfärbung beobachtet wurde und dann der Zeitraum, nach dem der Test wegen zu starker Verfärbung (Stabilitätsabbruch) beendet wurde.

...

Tabelle II

| Bestandteil (GT) | Polyvinylchlorid-Formmassen | | | | | | |
| --- | --- | --- | --- | --- | --- | --- | --- |
| | A' | B' | C' | D' | E' | F' | G' |
| Suspensions-PVC | 100 | 100 | 100 | 100 | 100 | 100 | 100 |
| Calciumstearat | 1,0 | 1,0 | 1,0 | 1,0 | 1,0 | 1,0 | 1,0 |
| Stearinsäure | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 |
| Zinklauroylcyanamid | 0,5 | 1,0 | 2,0 | - | - | - | - |
| Zinkstearoylcyanamid | - | - | - | 2,0 | - | - | - |
| Zinkstearat | - | - | - | - | 0,5 | 1,0 | 2,0 |
| Erste Verfärbung (min | 0 | 30 | 30 | 30 | 0 | 20 | 10 |
| Stabilitätsabbruch (min) | 30 | 40 | 50 | 50 | 40 | 40 | 30 |

Beispiel 17

Eine Polyvinylchlorid-Formmasse der Zusammensetzung

100 GT Suspensions-PVC (K-Wert 70; siehe Beispiel 16)
0,2 GT Stearinsäure
0,2 GT Paraffin, Smp. 71 °C
0,5 GT Pentaerythritester der Stearinsäure (Molverhältnis 1 : 1,5; OH-Zahl 212)

wurde mit erfindungsgemäßen Stabilisatorkombinationen aus

a) Natriumalumosilikat, Calciumstearat und Zinklauroylcyanamid,

b) Natriumalumosilikat, Calciumstearoylcyanamid und Zinkstearat bzw. Zinklauroylcyanamid

und zu Vergleichszwecken mit Stabilisatorgemischen aus

c) Natriumalumosilikat, Calciumstearat und Zinkstearat

vermischt. Als Natriumalumosilikat wurde ein feinteiliger synthetischer Zeolith NaA ($Na_2O:Al_2O_3:SiO_2$ = 0,9:1:2,4; Wassergehalt 19 Gewichtsprozent) eingesetzt. Die Zusammensetzungen der so erhaltenen stabilisierten Polyvinylchlorid-Formmassen H' bis Q' sind in der Tabelle III angegeben.

Die thermoplastischen Formmassen H' bis Q' wurden nach der oben angegebenen Methode auf ihre statische Thermostabilität geprüft. Die gefundenen Ergebnisse sind in der Tabelle III zusammengefaßt.

...

Tabelle III

| Bestandteil (GT) | Polyvinylchlorid-Formmassen | | | | | | | | | |
|---|---|---|---|---|---|---|---|---|---|---|
| | H' | I' | J' | K' | L' | M' | N' | O' | P' | Q' |
| Suspensions-PVC | 100 | 100 | 100 | 100 | 100 | 100 | 100 | 100 | 100 | 100 |
| Stearinsäure | 0,2 | 0,2 | 0,2 | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 | 0,5 | 0,5 | 0,5 |
| Na-Alumosilikat | 1,0 | 1,0 | 1,0 | 1,0 | 1,0 | 1,0 | 1,0 | 1,0 | 1,0 | 1,0 |
| Calciumstearat | 1,0 | 1,0 | 1,0 | - | - | - | 1,0 | 0,5 | 1,0 | 1,0 |
| Zinkstearat | - | - | - | 1,0 | - | - | 0,5 | 1,0 | 1,0 | 2,0 |
| Calciumstearoylcyanamid | - | - | - | 0,5 | 0,5 | 1,0 | - | - | - | - |
| Zinklauroylcyanamid | 0,5 | 1,0 | 2,0 | - | 1,0 | 2.0 | - | - | - | - |
| Erste Verfärbung (min) | 0 | 20 | 30 | 20 | 20 | 40 | 0 | 0 | 0 | 0 |
| Stabilitätsabbruch (min) | 50 | 60 | 60 | 50 | 60 | 70 | 70 | 40 | 50 | 40 |

...

Beispiel 18

Die thermoplastische Formmasse R' wurde durch Vermischen von

100 GT Suspensions-PVC (K-Wert 68; Vestolit(R) S 6858, Hersteller: Chemische Werke Hüls, Marl)
0,2 GT Stearinsäure
0,2 GT Paraffin, Smp. 71 °C
0,5 GT Pentaerythritester der Stearinsäure (Molverhältnis 1:1,5; OH-Zahl 212)

mit der Stabilisatorkombination R aus

0,5 GT Calciumstearoylcyanamid
1,0 GT Zinklauroylcyanamid

erhalten. Für die Herstellung der Formmassen S' bis AA' wurde die oben angegebene Stabilisatorkombination durch folgende Zusätze modifiziert:

S) 0,5 GT Natriumsalz der Äpfelsäure
T) 0,5 GT Natriumsalz der Weinsäure
U) 0,5 GT Tetrol aus Limonendiepoxid
V) 0,5 GT Additionsprodukt aus $C_{12-14}$-Alkylamin mit 4 Mol Glycid
W) 0,5 GT Rongalit C
X) 0,5 GT 3-Heptyl-4-hexyl-2-pyrazolin-5-on
Y) 1,0 GT Natriumalumosilikat (siehe Beispiel 2)
Z) 0,2 GT Natriumsalz der Äpfelsäure
1,0 GT Natriumalumosilikat (siehe Beispiel 2)
AA) 0,2 GT Natriumsalz der Äpfelsäure
0,5 GT Additionsprodukt aus $C_{12-14}$-Alkylamin und 4 Mol Glycid

...

Die Zusammensetzungen der auf diese Weise erhaltenen stabilisierten Polyvinylchlorid-Formmassen R' bis AA' können der Tabelle IV entnommen werden.

Die Formmassen R' bis AA' wurden nach der oben angegebenen Methode geprüft. Die gefundenen Ergebnisse sind in der Tabelle IV wiedergegeben.

...

0206210

Tabelle IV

| Bestandteil (GT) | Polyvinylchlorid-Formmassen | | | | | | | | | |
|---|---|---|---|---|---|---|---|---|---|---|
| | R' | S' | T' | U' | V' | W' | X' | Y' | Z' | AA' |
| Suspensions-PVC | 100 | 100 | 100 | 100 | 100 | 100 | 100 | 100 | 100 | 100 |
| Stearinsäure | 0,2 | 0,2 | 0,2 | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 | 0,5 | 0,5 | 0,5 |
| Calciumstearoylcyanamid | 0,5 | 0,5 | 0,5 | 0,5 | 0,5 | 0,5 | 0,5 | 0,5 | 0,5 | 0,5 |
| Zinklauroylcyanamid | 1,0 | 1,0 | 1,0 | 1,0 | 1,0 | 1,0 | 1,0 | 1,0 | 1,0 | 1,0 |
| Äpfelsäure, Na-Salz | - | 0,5 | - | - | - | - | - | - | 0,2 | 0,2 |
| Weinsäure, Na-Salz | - | - | 0,5 | - | - | - | - | - | - | - |
| Limonen-Tetrol | - | - | - | 0,5 | - | - | - | - | - | - |
| Alkylamin + 4 Glycid | - | - | - | - | 0,5 | - | - | - | - | 0,5 |
| Rongalit C | - | - | - | - | - | 0,5 | - | - | - | - |
| 3-Heptyl-4-hexyl-2-pyrazolin-5-on | - | - | - | - | - | - | 0,5 | - | - | - |
| Na-Alumosilikat c | - | - | - | - | - | - | - | 1,0 | 1,0 | - |
| Erste Verfärbung (min) | 20 | 0 | 30 | 30 | 30 | 0 | 10 | 20 | 20 | 30 |
| Stabilitätsabbruch (min) | 30 | 60 | 50 | 40 | 40 | 50 | 50 | 50 | 60 | 50 |

Beispiel 19

Einem Grundansatz aus

| | |
|---|---|
| 100 GT | Suspensions-PVC (K-Wert 70; Vestolit(R) S 7054, Hersteller: Chemische Werke Hüls, Marl) |
| 1,0 GT | Calciumstearat |
| 0,5 GT | Zinkstearat |
| 0,2 GT | Stearinsäure |
| 0,2 GT | Paraffin, Smp. 71° C |
| 0,5 GT | Pentaerythritester der Stearinsäure (Molverhältnis 1 : 1,5 ; OH-Zahl 212) |

wurden 1,0 GT eines Acylcyanamid-Natriumsalzes, dessen Acylrest sich von einem Fettsäuregemisch der Kettenlänge $C_6$-$C_{10}$ ableitete, zugemischt. Die stabilisierte Formmasse wurde dem statischen Thermostabilitätstest unterworfen. Dabei wurde die erste Verfärbung nach 10 Minuten und der Stabilitätsabbruch nach 50 Minuten beobachtet.

Beispiel 20

Dem Grundansatz aus Beispiel 19 wurden 1,0 GT Lauroylcyanamid-Magnesiumsalz (Beispiel 3) zugemischt. Bei der Prüfung der stabilisierten Formmasse nach dem statischen Thermostabilitätstest wurde die erste Verfärbung nach 10 Minuten und der Stabilitätsabbruch nach 40 Minuten beobachtet.

...

Beispiel 21

Einem Grundansatz aus

| | |
|---|---|
| 100 GT | Suspensions-PVC (K-Wert 70 ; Vestolit(R) S 7054; Hersteller: Chemische Werke Hüls, Marl) |
| 0,2 GT | Zink-2-ethylhexanoat |
| 0,4 GT | Trilaurylphosphit |

wurden 0,5 GT Stearoylcyanamid-Bariumsalz (Beispiel 4) zugemischt. Die stabilisierte Formmasse wurde im statischen Thermostabilitätstest geprüft. Die erste Verfärbung wurde nach 10 Minuten, der Stabilitätsabbruch nach 40 Minuten beobachtet.

Beispiel 22

Einem Grundansatz aus

| | |
|---|---|
| 100 GT | Suspensions-PVC (K-Wert 58; Solvic 258 RA; Hersteller: Deutsche Solvay-Werke GmbH, Solingen) |
| 0,3 GT | Calciumstearat |
| 1,0 GT | Isotridecylstearat |

wurden 2,0 GT Stearoylcyanamid-Bleisalz (Beispiel 6) zugemischt. Bei der Prüfung der stabilisierten Formmasse nach dem statischen Thermostabilitätstest wurde die erste Verfärbung nach 10 Minuten und der Stabilitätsabbruch nach 90 Minuten beobachtet. Die erfindungsgemäßen Formmassen zeigen gegenüber Formmassen der gleichen Zusammensetzung, die jedoch anstelle von Blei-Acylcyanamid dieselbe Menge dreibasisches Bleisulfat enthalten, eine wesentlich bessere Transparenz.

...

Beispiel 23

Dem Grundansatz aus Beispiel 19 wurden 0,1 GT Lauroylcyanamid-Kobaltsalz (Beispiel 8) zugemischt. Die stabilisierte Formmasse wurde dem statischen Thermostabilitätstest unterworfen. Dabei zeigte sich die erste Verfärbung nach 30 Minuten; der Stabilitätsabbruch wurde nach 40 Minuten festgestellt.

Beispiel 24

Dem Grundansatz aus Beispiel 19 wurden 0,1 GT Lauroylcyanamid-Mangansalz zugemischt. Bei der Prüfung der stabilisierten Formmasse nach dem statischen Thermostabilitätstest wurde die erste Verfärbung nach 30 Minuten und der Stabilitätsabbruch nach 40 Minuten festgestellt.

Beispiel 25

Dem Grundansatz aus Beispiel 19 wurden 0,1 GT Stearoylcyanamid-Mangansalz zugemischt. Im statischen Thermostabilitätstest zeigte die stabilisierte Formmasse die erste Verfärbung nach 30 Minuten; der Stabilitätsabbruch wurde nach 40 Minuten festgestellt.

...

Beispiel 26

Einem Grundansatz aus

| | |
|---|---|
| 100 GT | Suspensions-PVC (K-Wert 61; Vinoflex S 6115; Hersteller: BASF AG, Ludwigshafen) |
| 1,0 GT | Calciumstearat |
| 0,5 GT | Zinkstearat |

wurden 0,5 eines Acylcyanamid-Zinksalzes, dessen Acylrest sich von einer gehärteten Ricinolsäure ableitete, zugemischt. Die stabilisierte Formmasse wurde dem statischen Thermostabilitätstest unterworfen. Dabei wurde die erste Verfärbung nach 10 Minuten und der Stabilitätsabbruch nach 40 Minuten beobachtet.

...

## Patentansprüche

1. Stabilisierte Polyvinylchlorid-Formmassen, enthaltend mindestens eine Verbindung der Formel (I),

$$(R-\overset{\overset{O}{\|}}{C}-\overset{\ominus}{N}-CN)_n \quad M^{n\oplus} \qquad (I)$$

in der R einen geradkettigen oder verzweigten Alkyl- oder Alkenylrest mit 5 bis 21, vorzugsweise 11 bis 17, Kohlenstoffatomen bedeutet, der gegebenenfalls mit OH-, $O-CH_2-CH_2-OH$- und/oder O-R'-Gruppen substituiert sein kann, wobei R' einen Alkylrest mit 1 bis 4 Kohlenstoffatomen darstellt, während M für ein ein- oder zweiwertiges Metallkation steht und n die Wertigkeit des Metallkations bedeutet.

2. Stabilisierte Polyvinylchlorid-Formmassen nach Anspruch 1, dadurch gekennzeichnet, daß in der Formel (I) M ein Lithium-, Natrium-, Kalium-, Magnesium-, Calcium-, Strontium-, Barium-, Mangan-, Eisen-, Kobalt-, Nickel-, Zink-, Cadmium-, Kupfer- und/oder Bleikation ist.

3. Stabilisierte Polyvinylchlorid-Formmassen nach den Ansprüchen 1 und 2, dadurch gekennzeichnet, daß die Acylcyanamide der Formel (I) in Mengen von 0,1 bis 10, vorzugsweise 0,2 bis 5 Gewichtsteilen auf 100 Gewichtsteile Polymerisat vorhanden sind.

4. Stabilisierte Polyvinylchlorid-Formmassen nach den Ansprüchen 1 bis 3, dadurch gekennzeichnet, daß die Acylcyanamide der Formel (I) im Gemisch mit bekannten Primärstabilisatoren vorliegen.

...

5. Stabilisierte Polyvinylchlorid-Formmassen nach den Ansprüchen 1 bis 4, dadurch gekennzeichnet, daß sie neben den Primärstabilisatoren bekante Co-Stabilisatoren, Gleitmittel, Weichmacher, Antioxydantien, Zusätze zur Verbesserung der Schlagzähigkeit, Füllstoffe und/oder andere Hilfsmittel enthalten.

6. Verwendung von Verbindungen der Formel (I),

$$(R-\overset{\overset{O}{\|}}{C}-\overset{\ominus}{N}-CN)_n \quad M^{n\oplus} \qquad (I)$$

in der R einen geradkettigen oder verzweigten Alkyl- oder Alkenylrest mit 5 bis 21, vorzugsweise 11 bis 17, Kohlenstoffatomen bedeutet, der gegebenenfalls mit OH- , $O-CH_2-CH_2-OH-$ und/oder O-R'-Gruppen substituiert sein kann, wobei R' einen Alkylrest mit 1 bis 4 Kohlenstoffatomen darstellt, während M für ein ein- oder zweiwertiges Metallkation steht und n die Wertigkeit des Metallkations bedeutet, als Wärmestabilisatoren für Polyvinylchloridformmassen.

7. Verwendung vonb Verbindungen der Formel (I) nach Anspruch 6, dadurch gekennzeichnet, daß in der Formel (I) M ein Lithium-, Natrium-, Kalium-, Magnesium-, Calcium-, Strontium-, Barium-, Mangan-, Eisen-, Kobalt-, Nickel-, Zink-, Cadmium-, Kupfer- und/oder Bleikation ist.